(19)

**Europäisches Patentamt**

**European Patent Office**

**Office européen des brevets**

(11)   **EP 2 767 849 B1**

(12)   # EUROPEAN PATENT SPECIFICATION

(45) Date of publication and mention
of the grant of the patent:
**06.01.2016 Bulletin 2016/01**

(51) Int Cl.:
*G01S 13/90* (2006.01)   *G01S 7/02* (2006.01)

(21) Application number: **14168662.6**

(22) Date of filing: **16.05.2014**

(54) **Method and apparatus for processing polarimetric synthetic aperture radar image**

Verfahren und Vorrichtung zur Verarbeitung eines Bildes eines polarimetrischen Radars mit synthetischer Apertur

Procédé et appareil de traitement d'image radar polarimétrique à synthèse d'ouverture

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.01.2014 CN 201410014570**

(43) Date of publication of application:
**20.08.2014 Bulletin 2014/34**

(73) Proprietor: **Institute of Electronics, Chinese
Academy of
Sciences
Beijing 100190 (CN)**

(72) Inventors:
• **Deng, Yunkai
Beijing 100190 (CN)**
• **Li, Ning
Beijing 100190 (CN)**
• **Wang, Yu
Beijing 100190 (CN)**
• **Wang, Wei
Beijing 100190 (CN)**
• **Zhang, Zhimin
Beijing 100190 (CN)**
• **Wang, Chunle
Beijing 100190 (CN)**
• **Yu, Weidong
Beijing 100190 (CN)**
• **Zhao, Fengjun
Beijing 100190 (CN)**
• **Ni, Jiang
Beijing 100190 (CN)**

(74) Representative: **Gulde & Partner
Patent- und Rechtsanwaltskanzlei mbB
Wallstraße 58/59
10179 Berlin (DE)**

(56) References cited:
• **CZUCHLEWSKI K R ET AL: "New methods for landslide identification and mapping using SAR polarimetry obtained during the PacRim 2000 mission in Taiwan", GEOSCIENCE AND REMOTE SENSING SYMPOSIUM, 2005. IGARSS '05. PROCEEDINGS . 2005 IEEE INTERNATIONAL SEOUL, KOREA 25-29 JULY 2005, PISCATAWAY, NJ, USA,IEEE, vol. 3, 25 July 2005 (2005-07-25), pages 2086-2089, XP010849232, DOI: 10.1109/IGARSS.2005.1526427 ISBN: 978-0-7803-9050-8**
• **UHLMANN STEFAN ET AL: "Integrating Color Features in Polarimetric SAR Image Classification", IEEE TRANSACTIONS ON GEOSCIENCE AND REMOTE SENSING, IEEE SERVICE CENTER, PISCATAWAY, NJ, US, vol. 52, no. 4, 24 December 2013 (2013-12-24), pages 2197-2216, XP011536074, ISSN: 0196-2892, DOI: 10.1109/TGRS.2013.2258675 [retrieved on 2013-12-25]**
• **PENG WANG ET AL: "INVESTIGATION OF THE SCATTERING INTENSITY PARAMETERS AND THE HUE-SATURATION BASED COLOR SPACE MODELS USED IN THE CLOUDE-POTTIER DECOMPOSITION METHOD", 2009 IET INTERNATIONAL RADAR CONFERENCE,, 22 April 2009 (2009-04-22), XP055148455, ISSN: 0537-9989 ISBN: 978-1-84-919010-7**

EP 2 767 849 B1

**(Cont. next page)**

- KRISTINA R. CZUCHLEWSKI: "Polarimetric synthetic aperture radar study of the Tsaoling landslide generated by the 1999 Chi-Chi earthquake, Taiwan", JOURNAL OF GEOPHYSICAL RESEARCH, vol. 108, no. F1, 1 January 2003 (2003-01-01), XP055148421, ISSN: 0148-0227, DOI: 10.1029/2003JF000037
- DONALD K ATWOOD ET AL: "Improving PolSAR Land Cover Classification With Radiometric Correction of the Coherency Matrix", IEEE JOURNAL OF SELECTED TOPICS IN APPLIED EARTH OBSERVATIONS AND REMOTE SENSING, IEEE, USA, vol. 5, no. 3, 1 June 2012 (2012-06-01), pages 848-856, XP011449262, ISSN: 1939-1404, DOI: 10.1109/JSTARS.2012.2186791
- JONG-SEN LEE ET AL: "Unsupervised Classification Using Polarimetric Decomposition and the Complex Wishart Classifier", IEEE TRANSACTIONS ON GEOSCIENCE AND REMOTE SENSING, IEEE SERVICE CENTER, PISCATAWAY, NJ, US, vol. 37, no. 5, 1 September 1999 (1999-09-01), XP011021380, ISSN: 0196-2892
- CHIA-TANG CHEN ; KUN-SHAN CHEN: "A segment-based speckle filter for polarimetric SAR", PROC. SPIE, vol. 6363, 9 October 2006 (2006-10-09), XP040231558, DOI: doi: 10.1117/12.688170.
- NIANG M A ET AL: "Potential of C-Band Multipolarized and Polarimetric SAR for Soil Drainage Classification and Mapping", GEOSCIENCE AND REMOTE SENSING SYMPOSIUM, 2008. IGARSS 2008. IEEE INTERNATIONAL, IEEE, PISCATAWAY, NJ, USA, 7 July 2008 (2008-07-07), pages II-734, XP031422258, ISBN: 978-1-4244-2807-6
- WEN YANG ET AL: "Classification of Polarimetric SAR Data Based on Multidimensional Watershed Clustering", 1 January 2006 (2006-01-01), ADVANCED DATA MINING AND APPLICATIONS LECTURE NOTES IN COMPUTER SCIENCE; LECTURE NOTES IN ARTIFICIAL INTELLIGENCE;LNCS, SPRINGER, BERLIN, DE, PAGE(S) 157 - 164, XP019037953, ISBN: 978-3-540-37025-3 * figure 1 *
- ERSAHIN K ET AL: "Classification of Polarimetric SAR Data Using Spectral Graph Partitioning", GEOSCIENCE AND REMOTE SENSING SYMPOSIUM, 2006. IGARSS 2006. IEEE INTERNATIONAL CONFERENCE ON, IEEE, PI, 1 July 2006 (2006-07-01), pages 1756-1759, XP031179332, DOI: 10.1109/IGARSS.2006.454 ISBN: 978-0-7803-9510-7

**Description**

**TECHNICAL FIELD**

The present disclosure relates to image processing technology in a Synthetic Aperture Radar (SAR), and in particular to a method and apparatus for processing a Polarimetric SAR (PolSAR) image.

**BACKGROUND**

A landslide is a major natural disaster which may change natural environment and damage buildings, vehicles and other facilities. In addition, some landslides will form a dam on a river, blocking the river flow and forming a barrier lake or the like, thus forming a serious secondary disaster. Therefore, it is extremely important to rapidly detect a landslide and acquire information on its distribution to facilitate rescue efforts in a disaster area and elimination of a secondary disaster.

With the advantage of all-time, all-weather remote observation, an SAR has been widely applied in disaster monitoring. Meanwhile, a PolSAR can further enhance the ability of a radar in ground detection and identification by polarimetric target decomposion and classification, and therefore is widely applied in extraction and classification of disaster information. Generally, a PolSAR system analyzes polarimetric characteristics of a target area through polarimetric decomposition so as to further distinguish the target area. A conventional method for extracting landslide information with a PolSAR image mainly exploits backscattering characteristics of a target area as well as information on polarimetric target decomposition and a target structure. However, since most landslides occur in mountainous areas under which circumstance a lot of shadows and layovers will occur in a PolSAR image, which, in addition to diversity of types of ground objects, leads to ineffectiveness or even failure of the conventional method for extracting landslide information.

Czuchlewski, K. R. et al: "New methods for landslide identification and mapping using SAR polarimetry obtained during the PacRim 2000 mission in Taiwan" (Geoscience and Remote Sensing Symposium, 2005. IGARSS '05. Proceedings. 2005 IEEE International, Seoul, Korea 25-29 July 2005, Piscataway, NJ, USA, IEEE, Vol. 3, 25 July 2005, Page(s): 2086 - 2089) reanalyze RacRim 2000 L-band AIRSAR polarimetry collected over the western foothills of central Taiwan a year after the September 20, 1999 ChiChi earthquake, which produced more than 10,000 landslides. The objective is to explore the utility of SAR data, particularly polarimetry, for identifying and mapping natural hazards like landslides that essentially "resurface" landscapes. An overall goal of this research is to exploit the operational advantages of radars over optical instruments for rapid assessment and response to natural hazards and disasters. Three flightlines of XT11 AIRSAR were acquired over the two largest landslides, Tsaoling and Mt, Juo-feng-err, as well as hundreds of smaller slides generated by the ChiChi main and aftershocks. They first looked at the relative utility of single channel (co-polarized) SAR, dual polarimetry (co- and cross-polarized channels), and full polarimetry for landslide identification. They found that landslides are very difficult to recognize in fixed polarization SAR data. On the other hand, recognizing hillsides cleared of vegetation by landslides is relatively easy with dual and fully polarimetric data by using cross-polarized and co-polarized cross-sections to provide "radar vegetation indices." Radar target decomposition methods applied to the L-band polarimetry allowed them to explore the changes in scattering mechanisms induced by the action of landsliding on forested hillslopes, and to use derived polarimetric parameters to identify landslides. Application of speckle reduction filters does not degrade the resolution with which small landslides can be mapped. Finally, they explored unsupervised classification methods for efficient mapping of landslides under a rapid response mode of operation. A promising method applied to speckle-filtered data first implements the Freeman and Durden decomposition, separating pixels into three fundamental scattering categories, and then refines the preliminary map using an iterative Wishart classifier.

Uhlmann Stefan et al: "Integrating Color Features in Polarimetric SAR Image Classification" (IEEE Transactions on Geoscience and Remote Sensing, IEEE Service Center, Piscataway, NJ, US, vol. 52, no. 4, 24 December 2013, pages 2197 - 2216) first review previous attempts for PolSAR classifications using various feature combinations and then they introduce and perform in-depth investigation of the application of color features over the Pauli color-coded images besides SAR and texture features. They run an extensive set of comparative evaluations using 24 different feature set combinations over three images of the Flevoland- and the San Francisco Bay region from the RADARSAT-2 and the AIRSAR systems operating in C- and L-bands, respectively.

They then consider support vector machines and random forests classifier topologies to test and evaluate the role of color features over the classification performance. The classification results show that the additional color features introduce a new level of discrimination and provide noteworthy improvement in classification performance (compared with the traditionally employed PolSAR and texture features) within the application of land use and land cover classification.

Peng Wang et al: "Investigation of the scattering intensity parameters and the hue-saturation based color space models used in the Cloude-Pottier decomposition method" (Radar Conference, 2009 IET International, 22 April 2009) investigate and compare different scattering feature parameters anisotropy, span, I, lambda. Besides, different colour space models HSI, HSV, HSL, and IHSL are compared in the visualization of the results of Cloude-Pottier target decomposition. The merits and demerits of each scattering feature parameterand each colour space model are discussed, which provides useful help to the improvement of the Cloude-Pottier decomposition method.

Kristina R. Czuchlewski et al.: "Polarimetric Synthetic aperture radar study of the Tsaoling landslide generated by the 1999 Chi-Chi earthquake, Taiwan" (Journal of Geophysical Research, vol. 108, no. F1, 1 January 2003) employ L-band airborne synthetic aperture radar (SAR) polarimetry to detect surface changes produced by the Tsaoling landslide, the largest slope failure triggered by the September 1999 Chi-Chi earthquake in central Taiwan. Imaging polarimeters provide a complete description of the scattering properties of radar target materials. Resurfacing of forested hillslopes by landslides alters scattering mechanisms from those dominated by backscatter from trees to mechanisms associated with scatter from rough, bare surfaces. Scattering mechanism information on a per-pixel basis is extracted by decomposing matrices formed as the outer product of the complex scattering vector measured for each resolution cell. They classify surface cover type and thereby identify the extent of the landslide, using such polarimetric parameters as scattering entropy, anisotropy, and pedestal height, derived from the eigenvalues of the decomposition, as well as the weighted average scattering mechanism derived from the eigenvectors. They address the utility of full polarimetry versus dual polarimetry for landslide mapping purposes and show that fully polarimetric SAR is necessary for distinguishing water surfaces of varying roughness from the bare surfaces created by landsliding. They show that scattering entropy and average scattering mechanism, for example, can be used to identify the Tsaoling landslide source, run out area and impounded lakes as proficiently as maps obtained using satellite optical sensors, such as Landsat and the Indian Research Satellite. However, the operational advantages of radar over optical sensing techniques (namely, its day-night, all-weather data acquisition capability) suggest that SAR polarimetry could play a leading role in the rapid assessment of landslide disasters.

Donald K. Atwood et al: "Improving PolSAR Land Cover Classification With Radiometric Correction of the Coherency Matrix" (IEEE Journal of Selected Topics in Applied Earth Observations and Remote Sensing, IEEE, USA, vol. 5, no. 3, 1 June 2012, pages 848-856) is to investigate the impact of applying a radiometric correction to the PolSAR coherency matrix for a region of boreal forest in interior Alaska. The gamma naught radiometric correction estimates the local illuminated area at each grid point in the radar geometry. Then, each element of the coherency matrix is divided by the local area to produce a polarimetric product that is radiometrically "flat." This paper follows two paths, one with and one without radiometric correction, to investigate the impact uponclassification accuracy. Using a Landsat-derived land cover reference, the radiometric correction is shown to bring about significant qualitative and quantitative improvements in the land cover map. Confusion matrix analysis confirms the accuracy for most classes and shows a 15% improvement in the classification of the deciduous forest class.

Jong-Sen Lee et al: "Unsupervised classification using polarimetric decomposition and the complex Wishart classifier" (IEEE Transactions on Geoscience and Remote Sensing, IEEE Service Center, Piscataway, NJ, US, vol. 37, no. 5, 1 September 1999) propose a new method for unsupervised classification of terrain types and man-made objects using polarimetric synthetic aperture radar (SAR) data. This technique is a combination of the unsupervised classification based on polarimetrictarget decomposition, S.R. Cloude et al. (1997), and the maximum likelihood classifier based on the complex Wishart distribution for the polarimetriccovariance matrix, J.S. Lee et al. (1994). The authors use Cloude and Pottier's method to initially classify the polarimetric SAR image. The initial classificationmap defines training sets for classification based on the Wishart distribution. The classified results are then used to define training sets for the next iteration. Significant improvement has been observed in iteration. The iteration ends when the number of pixels switching classes becomes smaller than a predetermined number or when other criteria are met. The authors observed that the class centers in the entropy-alpha plane are shifted by each iteration. The final class centers in the entropy-alpha plane are useful for class identification by the scattering mechanism associated with each zone. The advantages of this method are the automatedclassification, and the interpretation of each class based on scattering mechanism. The effectiveness of this algorithm is demonstrated using a JPL/AIRSAR polarimetricSAR image.

Chia-Tang Chen, Kun-Shan Chen: "A segment-based speckle filter for polarimetric SAR" (Proc. SPIE, vol. 6363, 9 October 2006) is trying to combine the K-means clustering, Hopkins index to construct filtering window that has more exact shape to approach the land-cover for better preserving the edge sharpness after speckle reducing. The pilot results show that the filtering scheme mentioned above can perform better edge-sharpness preserving.

Niang M A et al: "Potential of C-Band Multipolarized and Polarimetric SAR for Soil Drainage Classification and Mapping" (Geoscience and Remote Sensing Symposium, 2008. IGARSS 2008. IEEE International, IEEE, Piscataway, NJ, USA, 7 July 2008, pages 11-734) was to evaluate the capability of high resolution SAR remote sensing data for mapping soil drainage. Backscattering coefficients (HH, VH, VV, RR, LL, psi45deg and psi135deg) extracted from CV-580 SAR were analyzed as function of drainage classes according to the land use (bare soil, annual crops). The multipolarization data showed a maximum of difference of 2 dB between drainage classes. Discriminant analysis performed after applying principal component analysis (PCA) showed overall classification accuracy of 60% for drainage classes. Only the poorly drained class was clearly discriminated (73-97%) under agricultural fields. Introducing the polarimetric parameters (mean alpha_ angle, entropy (H), and anisotropy (A)) in the general disciminant classification, the soil drainage classification accuracy was improved particularly by the anisotropy parameter. The study demonstrated the potential ofC-band multipolarized and polarimetric SAR for soil drainage classification and mapping. However, the high spatial resolution of the CV-580 showed high variability of scattering mechanisms associated to the fall acquisition period, where many crop fields were harvested but some corn fields being not. Spring acquisition near seeding of RADARSAT-2 (launched on December 14, 2007) imagery, should give better classification results.

Wen Yang et al: "Classification of Polarimetric SAR Data Based on Multidimensional Watershed Clustering" (1 January 2006, Advanced Data Mining and Applications Lecture Notes in Computer Science; Lecture Notes in Artificial Intelligence; Lncs, Springer, Berlin, DE, pages 157-164) proposes a polarimetric synthetic aperture radar (PolSAR) data classification method which applies multi-dimensional transform to identify density peaks and valleys for polarimetric signatures clustering. The new approach firstly introduces an improved maximum homogeneous region filter which can effectively preserve structure feature and polarimetric signatures. Then polarimetric signatures are extracted based on Freeman-Durden three-component composition. Finally, they obtain the classification results by multi-dimensional watershed clustering on the extracted polarimetric signatures. The effectiveness of this classification scheme is demonstrated using the full polarimetric L-band SAR imagery.

Ersahin K. et al: "Classification of Polarimetric SAR Data Using Spectral Graph Partitioning", (Geoscience and Remote Sensing Symposium, 2006. IGARSS 2006. IEEE International Conference on, IEEE, PI, 1 July 2006, pages 1756-1759) propose a new approach for classification of Polarimetric Synthetic Aperture Radar (POLSAR) data using segmentation that is formulated as a graph partitioning problem. This work is motivated by the fact that human experts are very good at visual interpretation and segmentation of POLSAR data, which is often challenging for automated analysis techniques. Spectral graph partitioning, a framework that has recently emerged in computer vision for solving grouping problems with perceptually plausible results, is used with modifications necessary to accommodate POLSAR data. Using the similarity of edge- aligned patch histograms and spatial proximity, classification performance that is superior to the Wishart classifier is achieved. This approach also provides a way to combine region-based and contour-based segmentation techniques, as it can accommodate different representations of polarimetric data as well as other data sources (e.g., optical imagery).

Therefore, there is an urgent need for a solution for precise extraction of a landslide area from a PolSAR image.

## SUMMARY

In view of this, it is desired that embodiments of the present disclosure provide a method and apparatus for processing a PolSAR image, capable of precise extraction of a landslide area from a PolSAR image.

To this end, a technical solution according to an embodiment of the present disclosure is implemented as follows.

A method for processing a Polarimetric Synthetic Aperture Radar (PolSAR) image in a monostatic case, includes steps of:

performing decomposition and color space conversion on an original PolSAR image to obtain a Saturation (S) channel image, a Hue (H) channel image and an intensity (I) channel image;

performing enhanced Lee filtering and K-means clustering on the S channel image to extract a first area from the S channel image;

performing, based on the first area, enhanced Lee filtering and K-means clustering on the H channel image to extract a second area from the H channel image;

performing, based on the second area, enhanced Lee filtering and K-means clustering on the I channel image, and performing morphological filtering on the I channel image having gone through the K-means clustering; and

determining, according to an area attribute parameter, a third area from the I channel image having gone through the morphological filtering,

wherein the step of performing decomposition and color space conversion on an original PolSAR image may include:

decomposing the original PolSAR image using Pauli matrices; and

converting the decomposed original PolSAR image from a Red-Green-Blue (RGB) color space into a Hue-Saturation-Intensity (HSI) color space..

In an embodiment, the first area is configured to represent a shadow area and a layover area.

In an embodiment, the step of performing, based on the first area, enhanced Lee filtering and K-means clustering on the H channel image to extract a second area from the H channel image may include:

zeroing color information of the first area in the H channel image in the HSI color space; and

performing enhanced Lee filtering and the K-means clustering on the zeroed H channel image to extract the second area from the H channel image, wherein the second area is configured to represent a potential landslide area.

In an embodiment, the step of performing, based on the second area, enhanced Lee filtering and K-means clustering on the I channel image, and performing the morphological filtering on the I channel image having gone through the K-means clustering, and determining, according to an area attribute parameter, a third area from the I channel image having gone through the morphological filtering may include:

separating the second area from the I channel image in the HSI color space;

performing enhanced Lee filtering and the K-means clustering on the I channel image of the second area;

performing the morphological filtering on the I channel image having gone through the K-means clustering; and

determining, according to the area attribute parameter, the third area from the I channel image having gone through the morphological filtering, wherein the third area is configured to represent a precise landslide area.

An apparatus for processing a Polarimetric Synthetic Aperture Radar (PolSAR) image in a monostatic case, includes: a preprocessing unit, a first extracting unit, a second extracting unit and a third extracting unit, where

the preprocessing unit is configured to perform decomposition and color space conversion on an original PolSAR image to obtain a Saturation (S) channel image, a Hue (H) channel image and an intensity (I) channel image;

the first extracting unit is configured to perform enhanced Lee filtering and K-means clustering on the S channel image to extract a first area from the S channel image;

the second extracting unit is configured to perform, based on the first area, enhanced Lee filtering and K-means clustering on the H channel image to extract a second area from the H channel image; and

the third extracting unit is configured to perform, based on the second area, enhanced Lee filtering and K-means clustering on the I channel image, and perform morphological filtering on the I channel image having gone through the K-means clustering; and determine, according to an area attribute parameter, a third area from the I channel image having gone through the morphological filtering,

wherein the preprocessing unit may include

a decomposing sub-unit configured to decompose the original PolSAR image using Pauli matrices; and

a color space converting sub-unit configured to convert the decomposed original PolSAR image from a Red-Green-Blue (RGB) color space into a Hue-Saturation-Intensity (HSI) color space..

In an embodiment, the first extracting unit may include
a first filtering sub-unit configured to perform enhanced Lee filtering on the S channel image in the HSI color space; and
a first clustering sub-unit configured to perform the K-means clustering on the filtered S channel image to extract the first area from the S channel image, wherein the first area is configured to represent a shadow area and a layover area.
In an embodiment, the second extracting unit may include
a setting sub-unit configured to zero color information of the first area in the H channel image in the HSI color space;
a second filtering sub-unit configured to perform enhanced Lee filtering on the zeroed H channel image; and
a second clustering sub-unit configured to perform the K-means clustering on the filtered H channel image to extract the second area from the H channel image, wherein the second area is configured to represent a potential landslide area.
In an embodiment, the third extracting unit includes:

a separating sub-unit configured to separate the second area from the I channel image in the HSI color space;

a third filtering sub-unit configured to perform enhanced Lee filtering on the I channel image of the second area;

a third clustering unit configured to perform the K-means clustering on the I channel image filtered by the third filtering sub-unit;

a fourth filtering unit configured to perform the morphological filtering on the I channel having gone through the K-means clustering; and

a determining sub-unit configured to determine, according to the area attribute parameter, the third area from the I channel image having gone through the morphological filtering, wherein the third area is configured to represent a precise landslide area.

With a technical solution of embodiments of the present disclosure, decomposition and color space conversion are performed on an original PolSAR image to obtain a Saturation (S) channel image, a Hue (H) channel image and an intensity (I) channel image; filtering and K-means clustering are performed on the S channel image to extract a first area from the S channel image; filtering and K-means clustering are performed on the H channel image based on the first area to extract a second area from the H channel image; filtering and K-means clustering are performed on the I channel image based on the second area, and morphological filtering is performed on the I channel image having gone through the K-means clustering; and a third area is determined, according to an area attribute parameter, from the I channel image having gone through the morphological filtering. In this way, information on colors of the original PolSAR image is fully utilized to rapidly detect and precisely extract a landslide area, i.e. the third area.

## BRIEF DESCRIPTION OF THE DRAWINGS

Fig.1 is a flowchart of a method for processing a PolSAR image according to an embodiment of the present disclosure;

Fig.2 is a schematic diagram illustrating a result of decomposing an original PolSAR image using Pauli matrices according to an embodiment of the present disclosure;

Fig.3 is a schematic diagram illustrating three channel images of a PolSAR image in an HSI color space according to an embodiment of the present disclosure;

Fig.4 is a schematic diagram illustrating a landslide area of a PolSAR image in an HSI color space according to an embodiment of the present disclosure; and

Fig.5 is a schematic diagram of a structure of an apparatus for processing a PolSAR image according to an embodiment of the present disclosure.

## DETAILED DESCRIPTION

To show characteristics and technical content of the present disclosure in more details, implementation of the present disclosure will be elaborated below with reference to the drawings, which are used merely for reference and explanation, instead of limiting the present disclosure.

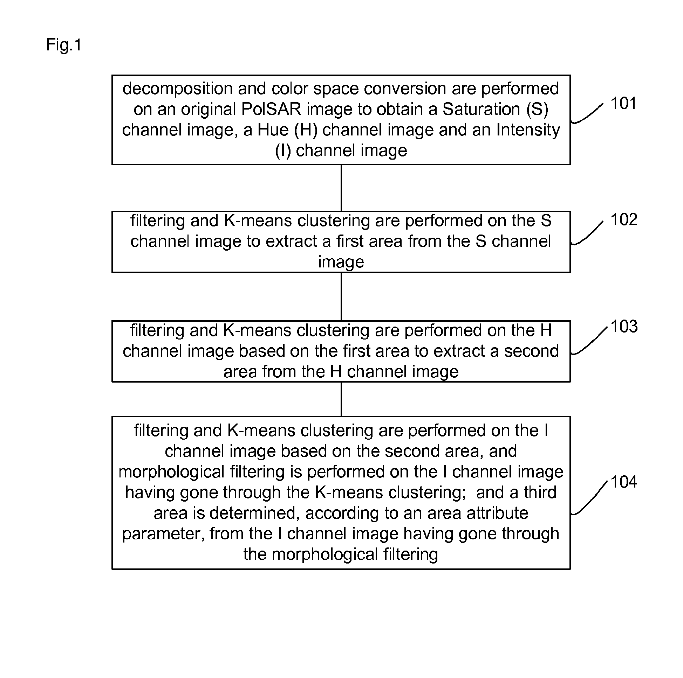

Fig.1 is a flowchart of a method for processing a PolSAR image according to an embodiment of the present disclosure. The method for processing a PolSAR image in the present embodiment is applied in an apparatus for processing a PolSAR image. As shown in Fig.1, the method for processing a PolSAR image includes steps as follows.

In step 101, decomposition and color space conversion are performed on an original PolSAR image to obtain a Saturation (S) channel image, a Hue (H) channel image and an intensity (I) channel image.

In an embodiment, the decomposition and the color space conversion may be performed on the original PolSAR image by

decomposing the original PolSAR image using Pauli matrices; and

converting the decomposed original PolSAR image from a Red-Green-Blue (RGB) color space into a Hue-Saturation-Intensity (HSI) color space.

Specifically, in decomposing the original PolSAR image using the Pauli matrices, in principle, a matrix representing characteristics of a target is expressed as the sum of several independent terms, wherein each of the independent terms is associated with a relevant scattering mechanism, so as to decompose scattering data. In the present embodiment, the original PolSAR image is decomposed using classic Pauli matrices; specifically, a scattering matrix corresponding to each pixel in the original PolSAR image is expanded into a weighted sum of four Pauli matrices, as shown in Formula (1):

$$S = \begin{bmatrix} S_{HH} & S_{HV} \\ S_{VH} & S_{VV} \end{bmatrix} = \frac{a}{\sqrt{2}}\begin{bmatrix} 1 & 0 \\ 0 & 1 \end{bmatrix} + \frac{b}{\sqrt{2}}\begin{bmatrix} 1 & 0 \\ 0 & -1 \end{bmatrix} + \frac{c}{\sqrt{2}}\begin{bmatrix} 0 & 1 \\ 1 & 0 \end{bmatrix} + \frac{d}{\sqrt{2}}\begin{bmatrix} 0 & -j \\ j & 0 \end{bmatrix} \quad (1)$$

where S is a polarimetric scattering matrix of a pixel, $S_{XY}$ represents a target backscattering coefficient with Y polarimetric emission and X polarimetric reception, and *a*, *b*, *c* and *d* are complex numbers which are, respectively:

$$a = \frac{S_{HH} + S_{VV}}{\sqrt{2}}, \quad b = \frac{S_{HH} - S_{VV}}{\sqrt{2}}, \quad c = \frac{S_{HV} + S_{VH}}{\sqrt{2}}, \quad d = \frac{S_{HV} - S_{VH}}{\sqrt{2}} \quad (2)$$

An advantage of decomposing the original PolSAR image using the Pauli matrices lies in that the amount of calculation is small and that the Pauli bases are complete and orthogonal, with certain immunity to noise ; the original PolSAR image can be decomposed using the Pauli matrices even in existence of noise or depolarization effect; In an embodiment, in the monostatic case with reciprocity, $S_{HV} = S_{VH}$, i.e. $d = 0$; in order to enhance the visual distinguishability of the image, false color synthesis may be performed on the three coefficients *a*, *b* and *c*, where coefficient $|a|^2$ indicates blue, coefficient $|b|^2$ indicates red, and coefficient $|c|^2$ indicates green;

Specifically, the decomposed original PolSAR image is converted from the RGB color space to the HSI color space, which may be achieved by Formula (3):

$$H = \begin{cases} \theta & , \; if \; B \leq G \\ 360 - \theta & , \; else \end{cases}$$
$$S = 1 - 3 \times \min(R,G,B) / (R+G+B)$$
$$I = (R+G+B) / 3 \quad (3)$$

where H represents an H channel image in the HSI color space, S represents an S channel image in the HSI color space, I represents an I channel image in the HSI color space, R represents an R channel image in the RGB color space, R represents a G channel image in the RGB color space, B represents a B channel image in the RGB color space, min represents the minimal value, and θ is expressed as in Formula (4):

$$\theta = \arccos\left\{ \frac{[(R-G)+(R-B)]/2}{\left[(R-G)^2 + (R-G)(G-B)\right]^{1/2}} \right\} \quad (4)$$

In the solution, different channels in the HSI color space have different sensitivities to different types of ground objects in the PolSAR image, the H channel image is more sensitive to a landslide area and a noise; the S channel image is more sensitive to a shadow and a layover, and the I channel image is more sensitive to intensity of a backscattering coefficient at the ground surface;

In step 102, filtering and K-means clustering are performed on the S channel image to extract a first area from the S channel image.

In an embodiment, the filtering and the K-means clustering may be performed on the S channel image to extract the first area from the S channel image by
performing enhanced Lee filtering and the K-means clustering on the S channel image in the HSI color space to extract the first area from the S channel image, where the first area is configured to represent a shadow area and a layover area;

Specifically, since the S channel image is more sensitive to a shadow and a layover, the enhanced Lee filtering and the K-means clustering are performed on the S channel image in the HSI color space to extract shadow and layover areas, and then information on the shadow and layover areas is transferred to the H channel image to perform Step 103.

In step 103, filtering and K-means clustering are performed on the H channel image based on the first area to extract a second area from the H channel image.

In an embodiment, the filtering and the K-means clustering may be performed on the H channel image based on the first area to extract the second area from the H channel image by

zeroing color information of the first area in the H channel image in the HSI color space; and

performing enhanced Lee filtering and the K-means clustering on the zeroed H channel image to extract the second area from the H channel image, where the second area is configured to represent a potential landslide area.

Specifically, after the H channel image receives information on the first area transferred by the S channel image, the extracted shadow and layover areas are first zeroed in the H channel of the HSI color space; then, since the H channel image is more sensitive to a landslide area and a noise, the enhanced Lee filtering and the K-means clustering are performed on the H channel image to extract the potential landslide area, and information on the potential landslide area is transferred to the I channel image.

In step 104, filtering and K-means clustering are performed on the I channel image based on the second area, and morphological filtering is performed on the I channel image having gone through the K-means clustering; and a third area is determined, according to an area attribute parameter, from the I channel image having gone through the morphological filtering.

In an embodiment, the filtering and the K-means clustering may be performed on the I channel image based on the second area, and the morphological filtering may be performed on the I channel image having gone through the K-means clustering, and a third area may be determined, according to the area attribute parameter, from the I channel image having gone through the morphological filtering by

separating the second area from the I channel image in the HSI color space;

performing enhanced Lee filtering and the K-means clustering on the I channel image of the second area;

performing the morphological filtering on the I channel image having gone through the K-means clustering; and

determining, according to the area attribute parameter, the third area from the I channel image having gone through the morphological filtering, where the third area is configured to represent a precise landslide area.

Specifically, after the I channel image receives information on the potential landslide area transferred by the H channel image, a portion of the I channel image corresponding to the extracted potential landslide area is separated; since the I channel image is more sensitive to intensity of a backscattering coefficient at the ground surface, the enhanced Lee filtering and the K-means clustering are performed on the separated I channel image; then the morphological filtering is performed on a result obtained after the K-means clustering to remove a random noise and a coherent speckle noise; finally, the precise landslide area is extracted according to the area attribute parameter, thus completing detection of a landslide.

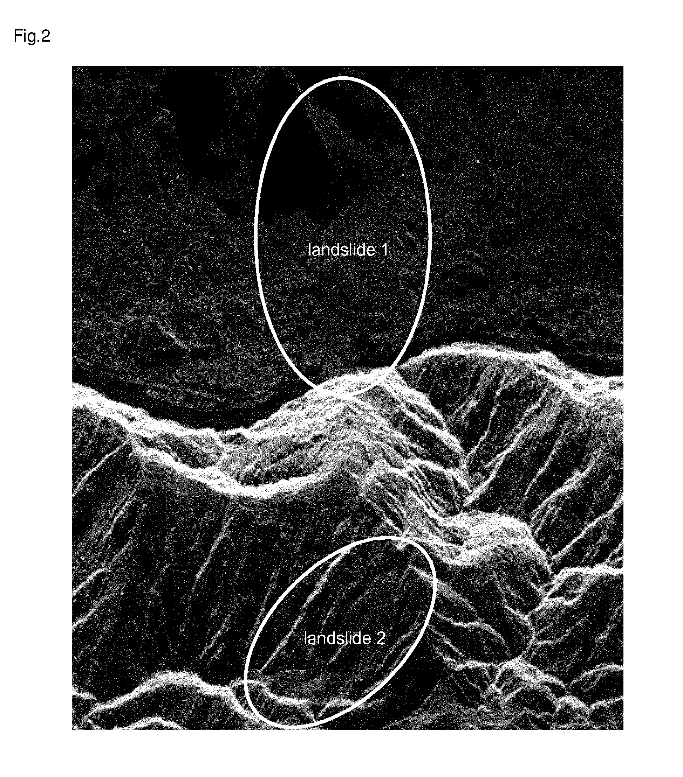

Fig.2 is a schematic diagram illustrating a result of decomposing an original PolSAR image using Pauli matrices. The area, which is located around the old Beichuan County in Sichuan Province, is collected on May 26th, 2008 with a high resolution full PolSAR made in China. Both two-dimensional geometric resolutions of the PolSAR image are 0.5 meters. As shown in Fig.2, there are two large-scale landslides in the observed area, i.e. Landslide 1 and Landslide 2; Landslide 1 flooded a village and blocked a river, causing severe casualties and secondary disasters.

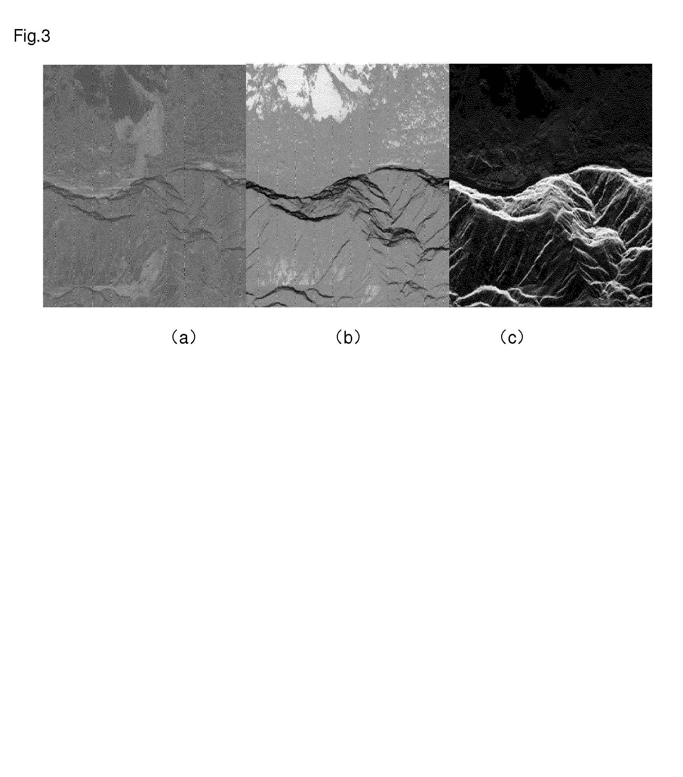

Fig.3 is a schematic diagram illustrating three channel images of a PolSAR image in an HSI color space, where Fig.3 (a) is an H channel image, Fig.3 (b) is an S channel image and Fig.3 (c) is an I channel image. As shown in Fig.3, the H channel image is more sensitive to a landslide area and a noise, the S channel image is more sensitive to a shadow and a layover, and the I channel image is more sensitive to intensity of a backscattering coefficient. Therefore, a target area can be extracted with high precision using the HSI color space.

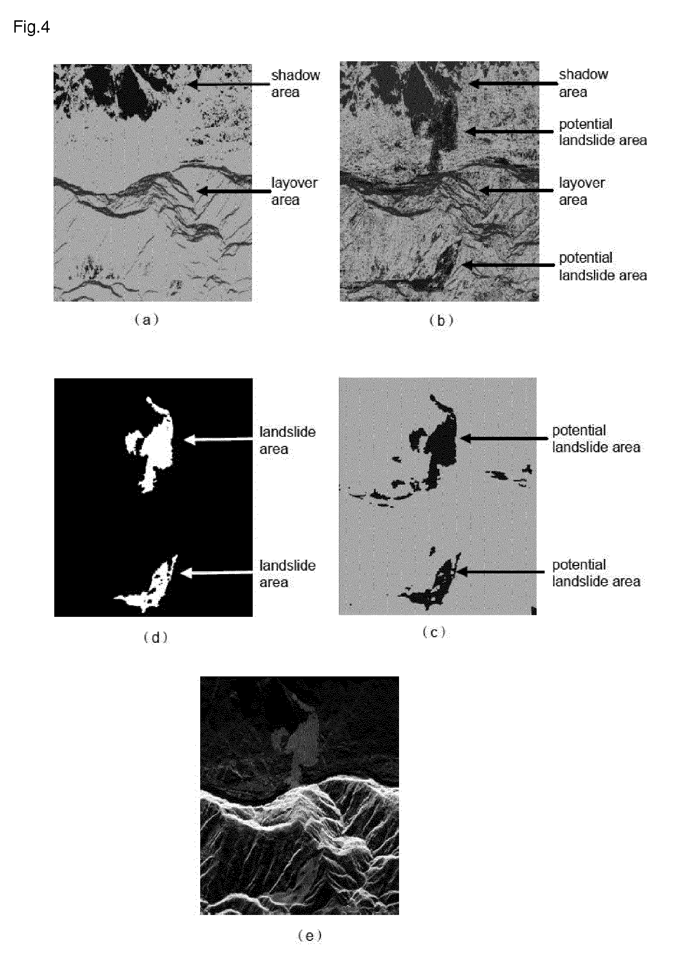

Fig.4 is a schematic diagram illustrating a landslide area of a PolSAR image in an HSI color space, where Fig.4 (a) is a schematic diagram illustrating a result obtained after filtering and K-means clustering are performed on an S channel image; Fig.4 (a) shows a shadow area and a layover area; it can be seen that technical solution of the embodiments of the present disclosure can effectively extract layover and shadow areas. Fig.4 (b) is a schematic diagram illustrating a result obtained after filtering and K-means clustering are performed on an H channel image after the shadow and layover areas are zeroed; Fig.4 (b) shows the shadow and layover areas and a potential landslide area; it can be seen that the technical solution of the present disclosure can effectively extract a potential landslide area. Fig.4 (c) is a schematic diagram illustrating a result obtained after filtering and K-means clustering are performed on a portion of an I channel image corresponding to the potential landslide area, and morphological filtering is performed on the result obtained after the K-means clustering; it can be seen that the technical solution of the embodiments of the present disclosure can suppress a random noise and a coherent speckle noise, thereby sharpening the edge of the landslide area. Fig.4 (d) is a schematic diagram illustrating precise large-scale landslide areas extracted according to an area attribute parameter; specifically, the potential landslide area in Fig.4 (c) is extracted first; and then an area threshold is set to select a connected area larger than the area threshold as the landslide area finally detected. Fig.4 (e) is a comparison chart of the original PolSAR image overlain by the areas in Fig.4 (d).

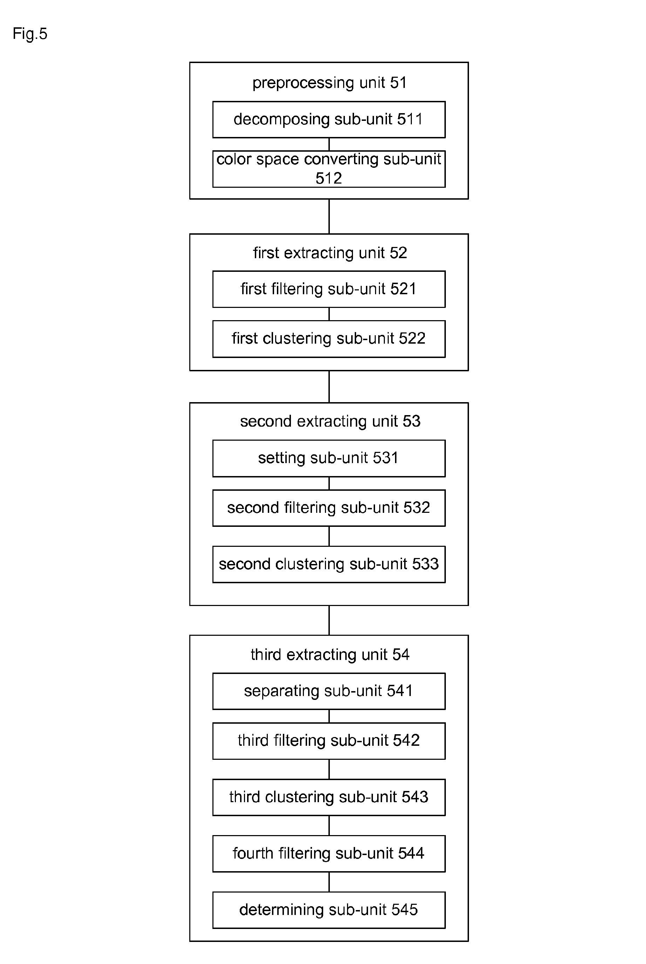

Fig.5 is a schematic diagram of a structure of an apparatus for processing a PolSAR image according to an embodiment of the present disclosure. As shown in Fig.5, the apparatus includes: a preprocessing unit 51, a first extracting unit 52, a second extracting unit 53 and a third extracting unit 54, wherein

the preprocessing unit 51 is configured to perform decomposition and color space conversion on an original PolSAR image to obtain an S channel image, an H channel image and an I channel image;

the first extracting unit 52 is configured to perform filtering and K-means clustering on the S channel image to extract a first area from the S channel image;

the second extracting unit 53 is configured to perform, based on the first area, filtering and K-means clustering on the H channel image to extract a second area from the H channel image; and

the third extracting unit 54 is configured to perform, based on the second area, filtering and K-means clustering on the I channel image, and perform morphological filtering on the I channel image having gone through the K-means clustering; and determine, according to an area attribute parameter, a third area from the I channel image having gone through the morphological filtering.

In an embodiment, the preprocessing unit 51 includes a decomposing sub-unit 511 and a color space converting sub-unit 512, wherein

the decomposing sub-unit 511 is configured to decompose the original PolSAR image using Pauli matrices; and

the color space converting sub-unit 512 is configured to convert the decomposed original PolSAR from an RGB color space into an HSI color space.

In an embodiment, the first extracting unit 52 includes a first filtering sub-unit 521 and a first clustering sub-unit 522, wherein

the first filtering sub-unit 521 is configured to perform enhanced Lee filtering on the S channel image in the HSI color space;

the first clustering sub-unit 522 is configured to perform the K-means clustering on the filtered S channel image to extract the first area from the S channel image, where the first area is configured to represent a shadow area and a layover area.

In an embodiment, the second extracting unit 53 includes: a setting sub-unit 531, a second filtering sub-unit 532 and a second clustering sub-unit 533, wherein

the setting sub-unit 531 is configured to zero color information of the first area in the H channel image in the HSI color space;

the second filtering sub-unit 532 is configured to perform enhanced Lee filtering on the zeroed H channel image; and

the second clustering sub-unit 533 is configured to perform the K-means clustering on the filtered H channel image to extract the second area from the H channel image, where the second area is configured to represent a potential landslide area.

In an embodiment, the third extracting unit 54 includes: a separating sub-unit 541, a third filtering sub-unit 542, a third clustering sub-unit 543, a fourth filtering sub-unit 544 and a determining sub-unit 545, where

the separating sub-unit 541 is configured to separate the second area from the I channel image in the HSI color space;

the third filtering sub-unit 542 is configured to perform enhanced Lee filtering on the I channel image of the second area;

the third clustering unit 543 is configured to perform the K-means clustering on the I channel image filtered by the third filtering sub-unit 542;

the fourth filtering unit 544 is configured to perform the morphological filtering on the I channel having gone through the K-means clustering;

the determining sub-unit 545 is configured to determine, according to the area attribute parameter, the third area from the I channel image having gone through the morphological filtering, where the third area is configured to represent a precise landslide area.

Those skilled in the art should understand that functions implemented by each unit and a sub-unit thereof in the apparatus for processing a PolSAR image in Fig.5 may be understood with reference to related description of the method for processing a PolSAR image.

In embodiments provided by the present disclosure, it should be understood that the disclosed method and system may be implemented in other ways. The described device/apparatus embodiments are merely exemplary. For example, the unit division is merely logical function division and can be other division in actual implementation. For example, multiple units or components can be combined, or integrated into another system, or some features/characteristics can be omitted or skipped. Furthermore, the coupling, or direct coupling or communicational connection among the components illustrated or discussed herein may be implemented through interfaces; indirect coupling or communicational connection between apparatuses/devices or units may be electrical, mechanical, or in other forms.

The units described as separate components may be or may not be physically separated. Components shown as units may be or may not be physical units; they may be located in one place, or distributed on multiple network units. Some or all of the units may be selected to achieve the purpose of a solution of the present embodiments as needed.

In addition, various functional units in each embodiment of the present disclosure may be integrated in one processing unit, or exist as separate units respectively; or two or more such units may be integrated in one unit. The integrated unit may be implemented in form of hardware, or hardware plus software functional unit(s).

A person of ordinary skill in the art can understand that, all or part of the steps of the foregoing method embodiments may be implemented by instructing, by a program, relevant hardware. The program may be stored in a non-transitory computer readable storage medium. When the program runs, the steps included in a method embodiment are performed. The non-transitory storage medium includes various media capable of storing program codes, such as a mobile storage device, a Read-Only Memory (ROM), a Random Access Memory (RAM), a magnetic disk, or an optical disk, etc.

Or when being implemented as a software functional module and sold or used as an independent product, the integrated unit in the present disclosure may be also stored in a non-transitory computer-readable storage medium. Based on such understanding, the essence of the technical solution of the embodiments of the present disclosure, or the part contributing to the prior art may be embodied in form of a software product. The computer software product is stored in a storage medium, including several instructions allowing a computer device (which may be a personal computer, a server, or a network device etc.) to execute all or part of the method in embodiments of the present disclosure. The storage medium includes various media capable of storing program codes, such as a mobile storage device, an ROM, a magnetic disk, or an optical disk, etc.

**Claims**

1. A method for processing a Polarimetric Synthetic Aperture Radar, PolSAR, image in a monostatic case, comprising steps of:

   performing (101) decomposition and color space conversion on an original PolSAR image to obtain a Saturation, S, channel image, a Hue, H, channel image and an Intensity, I, channel image;
   performing (102) enhanced Lee filtering and K-means clustering on the S channel image to extract a first area from the S channel image;
   performing (103), based on the first area, enhanced Lee filtering and K-means clustering on the H channel image to extract a second area from the H channel image;
   performing (104), based on the second area, enhanced Lee filtering and K-means clustering on the I channel image, and performing morphological filtering on the I channel image having gone through the K-means clustering; and
   determining (104), according to an area attribute parameter, a third area from the I channel image having gone through the morphological filtering,
   wherein the step of performing (101) decomposition and color space conversion on an original PolSAR image comprises:

   decomposing the original PolSAR image using Pauli matrices; and
   converting the decomposed original PolSAR image from a Red-Green-Blue, RGB, color space into a Hue-Saturation-Intensity, HSI, color space.

2. The method according to claim 1, wherein the first area is configured to represent a shadow area and a layover area.

3. The method according to claim 1, wherein the step (103) of performing, based on the first area, enhanced Lee filtering and K-means clustering on the H channel image to extract a second area from the H channel image comprises:

   zeroing color information of the first area in the H channel image in the HSI color space; and
   performing enhanced Lee filtering and the K-means clustering on the zeroed H channel image to extract the second area from the H channel image, wherein the second area is configured to represent a potential landslide area.

4. The method according to any of claims 1 to 3, wherein the step (104) of performing, based on the second area, enhanced Lee filtering and K-means clustering on the I channel image, and performing the morphological filtering on the I channel image having gone through the K-means clustering, and determining, according to an area attribute parameter, a third area from the I channel image having gone through the morphological filtering comprises:

   separating the second area from the I channel image in the HSI color space;
   performing enhanced Lee filtering and the K-means clustering on the I channel image of the second area;
   performing the morphological filtering on the I channel image having gone through the K-means clustering; and
   determining, according to the area attribute parameter, the third area from the I channel image having gone through the morphological filtering, wherein the third area is configured to represent a precise landslide area.

5. An apparatus for processing a Polarimetric Synthetic Aperture Radar, PolSAR, image in a monostatic case, comprising: a preprocessing unit (51), a first extracting unit (52), a second extracting unit (53) and a third extracting unit

(54), wherein

the preprocessing unit (51) is configured to perform decomposition and color space conversion on an original PolSAR image to obtain a Saturation, S, channel image, a Hue, H, channel image and an Intensity, I, channel image;

the first extracting unit (52) is configured to perform enhanced Lee filtering and K-means clustering on the S channel image to extract a first area from the S channel image;

the second extracting unit (53) is configured to perform, based on the first area, enhanced Lee filtering and K-means clustering on the H channel image to extract a second area from the H channel image; and

the third extracting unit (54) is configured to perform, based on the second area, enhanced Lee filtering and K-means clustering on the I channel image, and perform morphological filtering on the I channel image having gone through the K-means clustering; and determine, according to an area attribute parameter, a third area from the I channel image having gone through the morphological filtering,

wherein the preprocessing unit (51) comprises a decomposing sub-unit (511) and a color space converting sub-unit (512), wherein

the decomposing sub-unit (511) is configured to decompose the original PolSAR image using Pauli matrices; and

the color space converting sub-unit (512) is configured to convert the decomposed original PolSAR image from a Red-Green-Blue, RGB, color space into a Hue-Saturation-Intensity, HSI, color space.

6.  The apparatus according to claim 5, wherein the first extracting unit (52) comprises a first filtering sub-unit (521) and a first clustering sub-unit (522), wherein

    the first filtering sub-unit (521) is configured to perform enhanced Lee filtering on the S channel image in the HSI color space; and

    the first clustering sub-unit (522) is configured to perform the K-means clustering on the filtered S channel image to extract the first area from the S channel image, wherein the first area is configured to represent a shadow area and a layover area.

7.  The apparatus according to claim 5, wherein the second extracting unit (53) comprises: a setting sub-unit (531), a second filtering sub-unit (532) and a second clustering sub-unit (533), wherein

    the setting sub-unit (531) is configured to zero color information of the first area in the H channel image in the HSI color space;

    the second filtering sub-unit (532) is configured to perform enhanced Lee filtering on the zeroed H channel image; and

    the second clustering sub-unit (533) is configured to perform the K-means clustering on the filtered H channel image to extract the second area from the H channel image, wherein the second area is configured to represent a potential landslide area.

8.  The apparatus according to any of claims 5 to 7, wherein the third extracting unit (54) comprises: a separating sub-unit (541), a third filtering sub-unit (542), a third clustering sub-unit (543), a fourth filtering sub-unit (544) and a determining sub-unit (545), wherein

    the separating sub-unit (541) is configured to separate the second area from the I channel image in the HSI color space;

    the third filtering sub-unit (542) is configured to perform enhanced Lee filtering on the I channel image of the second area;

    the third clustering unit (543) is configured to perform the K-means clustering on the I channel image filtered by the third filtering sub-unit;

    the fourth filtering unit (544) is configured to perform the morphological filtering on the I channel having gone through the K-means clustering; and

    the determining sub-unit (545) is configured to determine, according to the area attribute parameter, the third area from the I channel image having gone through the morphological filtering, wherein the third area is configured to represent a precise landslide area.

**Patentansprüche**

1.  Verfahren zur Verarbeitung eines Bildes eines polarimetrischen Radars mit synthetischer Apertur, PolSAR, in einem monostatischen Fall, aufweisend die folgenden Schritte:

    Durchführen (101) einer Zerlegung und Farbraumkonversion in einem ursprünglichen PolSAR-Bild, um ein Sättigungs, S,-Kanalbild, ein Farbton, H,-Kanalbild und ein Lichtintensitäts, I,-Kanalbild zu gewinnen;
    Durchführen (102) einer erweiterten Lee-Filterung und K-means-Clusterung im S-Kanalbild, um ein erstes Gebiet aus dem S-Kanalbild zu extrahieren;

basierend auf dem ersten Gebiet Durchführen (103) einer erweiterten Lee-Filterung und K-means-Clusterung im H-Kanalbild, um ein zweites Gebiet aus dem H-Kanalbild zu extrahieren;

basierend auf dem zweiten Gebiet Durchführen (104) einer erweiterten Lee-Filterung und K-means-Clusterung im I-Kanalbild und Durchführen einer morphologischen Filterung im I-Kanalbild, das die K-means-Clusterung durchlaufen hat; und

gemäß einem Gebietsattributparameter Bestimmen (104) eines dritten Gebiets aus dem Kanalbild, das die morphologische Filterung durchlaufen hat,

wobei der Schritt des Durchführens (101) der Zerlegung und Farbraumkonversion in einem ursprünglichen PolSAR-Bild aufweist:

> Zerlegen des ursprünglichen PolSAR-Bildes mittels Pauli-Matrizen; und
> Konvertieren des zerlegten ursprünglichen PolSAR-Bildes aus einem Rot-Grün-Blau, RGB,-Farbraum in einen Farbton-Sättigung-Lichtintensität, HSI,-Farbraum.

2. Verfahren nach Anspruch 1, wobei das erste Gebiet konfiguriert ist, um ein Schattengebiet und ein Layover-Gebiet darzustellen.

3. Verfahren nach Anspruch 1, wobei der Schritt (103) des Durchführens der erweiterten Lee-Filterung und K-means-Clusterung im H-Kanalbild basierend auf dem ersten Gebiet, um ein zweites Gebiet aus dem H-Kanalbild zu extrahieren, aufweist:

> Nullen der Farbinformation des ersten Gebiets im H-Kanalbild im HSI-Farbraum; und
> Durchführen einer erweiterten Lee-Filterung und K-Means-Clusterung im genullten H-Kanalbild, um das zweite Gebiet aus dem H-Kanalbild zu extrahieren, wobei das zweite Gebiet konfiguriert ist, um ein potenzielles Rutschgebiet darzustellen.

4. Verfahren nach einem der Ansprüche 1 bis 3, wobei der Schritt (104) des Durchführens der erweiterten Lee-Filterung und K-means-Clusterung im I-Kanalbild basierend auf dem zweiten Gebiet und des Durchführens der morphologischen Filterung im I-Kanalbild, das die K-means-Clusterung durchlaufen hat, und des Bestimmens eines dritten Gebiets aus dem I-Kanalbild, das die morphologische Filterung durchlaufen hat, gemäß einem Gebietsattributparameter Folgendes aufweist:

> Trennen des zweiten Gebiets vom I-Kanalbild im HSI-Farbraum;
> Durchführen einer erweiterten Lee-Filterung und K-means-Clusterung im I-Kanalbild des zweiten Gebiets;
> Durchführen der morphologischen Filterung im I-Kanalbild, das die K-means-Clusterung durchlaufen hat; und
> Bestimmen des dritten Gebiets aus dem I-Kanalbild, das die morphologische Filterung durchlaufen hat, gemäß dem Gebietsattributparameter, wobei das dritte Gebiet konfiguriert ist, um ein präzises Rutschgebiet darzustellen.

5. Vorrichtung zur Verarbeitung eines Bildes eines polarimetrischen Radars mit synthetischer Apertur, PolSAR, in einem monostatischen Fall, aufweisend: eine Vorverarbeitungseinheit (51), eine erste Extraktionseinheit (52), eine zweite Extraktionseinheit (53) und eine dritte Extraktionseinheit (54), wobei

die Vorverarbeitungseinheit (51) konfiguriert ist, um eine Zerlegung und Farbraumkonversion in einem ursprünglichen PolSAR-Bild durchzuführen, um ein Sättigungs, S,-Kanalbild, ein Farbton, H,-Kanalbild und ein Lichtintensitäts, I,-Kanalbild zu gewinnen;

die erste Extraktionseinheit (52) konfiguriert ist, um eine erweiterte Lee-Filterung und K-means-Clusterung im S-Kanalbild durchzuführen, um ein erstes Gebiet aus dem S-Kanalbild zu extrahieren;

die zweite Extraktionseinheit (53) konfiguriert ist, um basierend auf dem ersten Gebiet eine erweiterte Lee-Filterung und K-means-Clusterung im H-Kanalbild durchzuführen, um ein zweites Gebiet aus dem H-Kanalbild zu extrahieren; und

die dritte Extraktionseinheit (54) konfiguriert ist, um basierend auf dem zweiten Gebiet eine erweiterte Lee-Filterung und K-means-Clusterung im I-Kanalbild durchzuführen und eine morphologische Filterung im I-Kanalbild, das die K-means-Clusterung durchlaufen hat, durchzuführen und gemäß einem Gebietsattributparameter ein drittes Gebiet aus dem I-Kanalbild, das die morphologische Filterung durchlaufen hat, zu bestimmen,

wobei die Vorverarbeitungseinheit (51) eine Zerlegungs-Untereinheit (511) und eine Farbraumkonversions-Untereinheit (512) aufweist, wobei

die Zerlegungs-Untereinheit (511) konfiguriert ist, um das ursprüngliche PolSAR-Bild mittels Pauli-Matrizen zu zerlegen; und

die Farbraumkonversions-Untereinheit (512) konfiguriert ist, um das zerlegte ursprüngliche PolSAR-Bild von einem Rot-Grün-Blau, RGB,-Farbraum in einen Farbton-Sättigung-Lichtintensität, HSI,-Farbraum zu konvertieren.

6. Vorrichtung nach Anspruch 5, wobei die erste Extraktionseinheit (52) eine erste Filterungs-Untereinheit (521) und eine erste Clusterungs-Untereinheit (522) aufweist, wobei

die erste Filterungs-Untereinheit (521) konfiguriert ist, um eine erweiterte Lee-Filterung im S-Kanalbild im HSI-Farbraum durchzuführen; und

die erste Clusterungs-Untereinheit (522) konfiguriert ist, um die K-means-Clusterung im gefilterten S-Kanalbild durchzuführen, um das erste Gebiet aus dem S-Kanalbild zu extrahieren, wobei das erste Gebiet konfiguriert ist, um ein Schattengebiet und ein Layover-Gebiet darzustellen.

7. Vorrichtung nach Anspruch 5, wobei die zweite Extraktionseinheit (53) aufweist: eine Einstell-Untereinheit (531), eine zweite Filterungs-Untereinheit (532) und eine zweite Clusterungs-Untereinheit (533), wobei

die Einstell-Untereinheit (531) konfiguriert ist, um die Farbinformation des ersten Gebiets im H-Kanalbild im HSI-Farbraum zu nullen;

die zweite Filterungs-Untereinheit (532) konfiguriert ist, um eine erweiterte Lee-Filterung im genullten H-Kanalbild durchzuführen; und

die zweite Clusterungs-Untereinheit (533) konfiguriert ist, um die K-means-Clusterung im gefilterten H-Kanalbild durchzuführen, um das zweite Gebiet aus dem H-Kanalbild zu extrahieren, wobei das zweite Gebiet konfiguriert ist, um ein potenzielles Rutschgebiet darzustellen.

8. Vorrichtung nach einem der Ansprüche 5 bis 7, wobei die dritte Extraktionseinheit (54) aufweist: eine Trennungs-Untereinheit (541), eine dritte Filterungs-Untereinheit (542), eine dritte Clusterungs-Untereinheit (543), eine vierte Filterungs-Untereinheit (544) und eine Bestimmungs-Untereinheit (545), wobei

die Trennungs-Untereinheit (541) konfiguriert ist, um das zweite Gebiet vom I-Kanalbild im HSI-Farbraum zu trennen;

die dritte Filterungs-Untereinheit (542) konfiguriert ist, um eine erweiterte Lee-Filterung im I-Kanalbild des zweiten Gebiets durchzuführen;

die dritte Clusterungseinheit (543) konfiguriert ist, um die K-means-Clusterung im von der dritten Filterungs-Untereinheit gefilterten I-Kanalbild durchzuführen;

die vierte Filterungseinheit (544) konfiguriert ist, um die morphologische Filterung im I-Kanal, der die K-means-Clusterung durchlaufen hat, durchzuführen; und

die Bestimmungs-Untereinheit (545) konfiguriert ist, um gemäß dem Gebietsattributparameter das dritte Gebiet aus dem I-Kanalbild, das die morphologische Filterung durchlaufen hat, zu bestimmen, wobei das dritte Gebiet konfiguriert ist, um ein präzises Rutschgebiet darzustellen.

**Revendications**

1. Procédé de traitement d'une image radar polarimétrique à synthèse d'ouverture, PolSAR, dans un cas monostatique, comprenant les étapes suivantes :

réalisation (101) de la décomposition et la conversion d'espace coloré sur une image PolSAR à saturation, S, une image de canal, une teinte, H, une image de canal et une image de canal d'intensité, I;

réalisation (102) d'une filtration Lee améliorée et d'un groupage de moyens K sur l'image de canal S pour extraire une première zone de l'image de canal S ;

réalisation (103), en se basant sur la première zone, d'une filtration améliorée et d'un groupage de moyens K sur l'image de canal H pour extraire une deuxième zone de l'image de canal H ;

réalisation (104), en se basant sur la deuxième zone, d'une filtration améliorée et d'un groupage de moyens K sur l'image de canal I et réalisation d'une filtration morphologique sur l'image de canal I ayant subi le groupage de moyens K ; et

détermination (104), en fonction d'un par d'attribution de zone, d'une troisième zone à partir de l'image de canal I ayant subi la filtration morphologique,

dans lequel l'étape de réalisation (101) et de conversion d'espace coloré sur une image PolSAR originale comprend :

la décomposition de l'image PolSAR en utilisant des matrices de Pauli ; et
la conversion de l'image PolSAR originale décomposée à partir d'un espace coloré rouge-vert-bleu, RGB, en un espace coloré à intensité de saturation chromatique, HSI.

2. Procédé selon la revendication 1, dans lequel la première zone est configurée pour représenter une zone d'ombre et une zone de superposition.

3. Procédé selon la revendication 1, dans lequel l'étape (103) de réalisation, en se basant sur la première zone, d'une filtration Lee améliorée et d'un groupage de moyens K sur l'image de canal H pour extraire une deuxième zone de l'image de canal H comprend :

   la mise à zéro de l'information de couleur de la première zone dans l'image de canal H dans l'espace coloré HSI ; et
   la réalisation d'une filtration Lee améliorée et de groupage de moyens K sur l'image de canal H mise à zéro pour extraire la deuxième zone de l'image de canal H, la deuxième zone étant configurée pour représenter une zone de glissement de terrain potentiel.

4. Procédé selon l'une quelconque des revendications 1 à 3, dans lequel l'étape (104) de réalisation, en se basant sur la deuxième zone, d'une filtration Lee améliorée et de groupage de moyens K sur l'image de canal I et de réalisation de la filtration morphologique sur l'image de canal I ayant subi le groupage de moyens K et de détermination, en fonction d'un paramètre d'attribution de zone, d'une troisième zone à partir de l'image de canal I ayant subi la filtration morphologique comprend :

   la séparation de la deuxième zone de l'image de canal I dans l'espace coloré HSI ;
   la réalisation de la filtration Lee améliorée et du groupage de moyens K sur l'image de canal I de la deuxième zone ;
   la réalisation de la filtration morphologique sur l'image de canal I ayant subi le groupage de moyens K ; et
   la détermination, en fonction du paramètre d'attribution de zone, de la troisième zone à partir de l'image de canal I et ayant subi la filtration morphologique, la troisième zone étant configurée pour représenter une zone précise de glissement de terrain.

5. Appareil de traitement d'une image radar polarimétrique à synthèse d'ouverture, PolSAR, dans un cas monostatique, comprenant : une unité de prétraitement (51), une première unité d'extraction (52), une deuxième unité d'extraction (53) et une troisième unité d'extraction (54), dans lequel
   l'unité de prétraitement (51) est configurée pour réaliser la décomposition et la conversion d'espace coloré sur une image PolSAR original pour obtenir une image à saturation, S, une image de canal, une teinte, H, une image de canal et une image de canal d'intensité, I ;
   la première unité d'extraction (52) est configurée pour réaliser une filtration Lee améliorée et un groupage de moyens K sur l'image de canal S pour extraire une première zone de l'image de canal S ;
   la deuxième unité d'extraction (53) est configurée pour réaliser, à partir de la première zone, une filtration Lee améliorée et un groupage de moyens K sur l'image de canal H pour extraire une deuxième zone de l'image de canal H ; et
   la troisième unité d'extraction (54) est configurée pour réaliser, à partir de la deuxième zone, une filtration Lee améliorée et un groupage de moyens K sur l'image de canal I et réaliser une filtration morphologique sur l'image de canal I ayant subi le groupage de moyens K ; et déterminer, en fonction des paramètres d'attribution de zone, une troisième zone à partir de l'image de canal I ayant subi la filtration morphologique,
   l'unité de prétraitement (51) comprenant une sous-unité de décomposition (511) et une sous-unité de conversion d'espace coloré (512),
   la sous-unité de décomposition (511) étant configurée pour décomposer l'image PolSAR originale en utilisant des matrices de Pauli ; et
   la sous-unité de conversion d'espace coloré (512) étant configurée pour convertir l'image PolSAR originale décomposée provenant d'un espace rouge-vert-bleu, RGB, en un espace coloré à intensité de saturation chromatique, HSI.

6. Appareil selon la revendication 5, dans lequel la première unité d'extraction (52) comprend une première sous-unité de filtration (521) et une première sous-unité de groupage (522),
   la première sous-unité de filtration (521) est configurée pour réaliser une filtration Lee améliorée sur l'image de canal S dans l'espace coloré HSI ; et
   la première sous-unité de groupage (522) est configurée pour réaliser le groupage de moyens K sur l'image de canal S filtrée pour extraire la première zone de l'image de canal S, la première zone étant configurée pour représenter une zone d'ombre et une zone de superposition.

**7.** Appareil selon la revendication 5, dans lequel la deuxième unité d'extraction (53) comprend : une sous-unité de réglage (531), une seconde sous-unité de filtration (532) et une seconde sous-unité de groupage (533),

la sous unité de réglage (531) étant configurée pour mettre à zéro les informations de couleur de la première zone dans l'image de canal H dans l'espace coloré HSI ;

la seconde sous-unité de filtration (532) étant configurée pour réaliser une filtration Lee améliorée sur les images de canal H mises à zéro ; et

la seconde sous-unité de groupage (533) étant configurée pour réaliser le groupage de moyens K sur l'image de canal H filtrée, la seconde zone étant configurée pour représenter une zone de glissement de terrain potentiel.

**8.** Appareil selon l'une quelconque des revendications 5 à 7, dans lequel la troisième unité d'extraction (54) comprend : une sous-unité de séparation (541), une troisième sous unité de filtration (542), une troisième sous-unité de groupage (543), une 4e sous-unité de groupage (544) et une sous-unité de détermination (545)

la sous-unité de séparation (541) étant configurée pour séparer la seconde zone de l'image de canal I dans l'espace coloré HSI ;

la troisième sous-unité de filtration (542) étant configurée pour réaliser une filtration Lee améliorée sur l'image de canal I de la deuxième zone ;

la troisième sous-unité de groupage (543) étant configurée pour réaliser le groupage de moyens K sur l'image de canal I filtrée par la troisième sous-unité de filtration;

la 4e unité de filtration (544) étant configurée pour réaliser la filtration morphologique sur l'image de canal I ayant subi le groupage de moyens K ; et

la sous-unité de détermination (545) étant configurée pour déterminer, en fonction du paramètre d'attribution de zone, la troisième zone à partir de l'image de canal I ayant subi la filtration morphologique, la troisième zone étant configurée pour représenter une zone précise de glissement de terrain.

Fig.1

| decomposition and color space conversion are performed on an original PolSAR image to obtain a Saturation (S) channel image, a Hue (H) channel image and an Intensity (I) channel image | 101 |

| filtering and K-means clustering are performed on the S channel image to extract a first area from the S channel image | 102 |

| filtering and K-means clustering are performed on the H channel image based on the first area to extract a second area from the H channel image | 103 |

| filtering and K-means clustering are performed on the I channel image based on the second area, and morphological filtering is performed on the I channel image having gone through the K-means clustering; and a third area is determined, according to an area attribute parameter, from the I channel image having gone through the morphological filtering | 104 |

Fig.2

Fig.3

(a)　　　　　　　　(b)　　　　　　　　(c)

Fig.4

(a)

(b)

(d)

(c)

(e)

Fig.5

```
┌─────────────────────────────────────────┐
│          preprocessing unit 51           │
│  ┌─────────────────────────────────────┐ │
│  │      decomposing sub-unit 511       │ │
│  └─────────────────────────────────────┘ │
│  ┌─────────────────────────────────────┐ │
│  │  color space converting sub-unit    │ │
│  │                512                  │ │
│  └─────────────────────────────────────┘ │
└─────────────────────────────────────────┘

┌─────────────────────────────────────────┐
│        first extracting unit 52          │
│  ┌─────────────────────────────────────┐ │
│  │     first filtering sub-unit 521    │ │
│  └─────────────────────────────────────┘ │
│  ┌─────────────────────────────────────┐ │
│  │    first clustering sub-unit 522    │ │
│  └─────────────────────────────────────┘ │
└─────────────────────────────────────────┘

┌─────────────────────────────────────────┐
│       second extracting unit 53          │
│  ┌─────────────────────────────────────┐ │
│  │       setting sub-unit 531          │ │
│  └─────────────────────────────────────┘ │
│  ┌─────────────────────────────────────┐ │
│  │   second filtering sub-unit 532     │ │
│  └─────────────────────────────────────┘ │
│  ┌─────────────────────────────────────┐ │
│  │  second clustering sub-unit 533     │ │
│  └─────────────────────────────────────┘ │
└─────────────────────────────────────────┘

┌─────────────────────────────────────────┐
│        third extracting unit 54          │
│  ┌─────────────────────────────────────┐ │
│  │     separating sub-unit 541         │ │
│  └─────────────────────────────────────┘ │
│  ┌─────────────────────────────────────┐ │
│  │    third filtering sub-unit 542     │ │
│  └─────────────────────────────────────┘ │
│  ┌─────────────────────────────────────┐ │
│  │   third clustering sub-unit 543     │ │
│  └─────────────────────────────────────┘ │
│  ┌─────────────────────────────────────┐ │
│  │   fourth filtering sub-unit 544     │ │
│  └─────────────────────────────────────┘ │
│  ┌─────────────────────────────────────┐ │
│  │    determining sub-unit 545         │ │
│  └─────────────────────────────────────┘ │
└─────────────────────────────────────────┘
```

## REFERENCES CITED IN THE DESCRIPTION

**Non-patent literature cited in the description**

- New methods for landslide identification and mapping using SAR polarimetry obtained during the PacRim 2000 mission in Taiwan. **CZUCHLEWSKI, K. R. et al.** Geoscience and Remote Sensing Symposium. IEEE International, 25 July 2005, vol. 3, 2086-2089
- Integrating Color Features in Polarimetric SAR Image Classification. **UHLMANN STEFAN et al.** IEEE Transactions on Geoscience and Remote Sensing. IEEE Service Center, 24 December 2013, vol. 52, 2197-2216
- **PENG WANG et al.** Investigation of the scattering intensity parameters and the hue-saturation based color space models used in the Cloude-Pottier decomposition method. *Radar Conference, 2009 IET International,* 22 April 2009
- **KRISTINA R. CZUCHLEWSKI et al.** Polarimetric Synthetic aperture radar study of the Tsaoling landslide generated by the 1999 Chi-Chi earthquake, Taiwan. *Journal of Geophysical Research,* 01 January 2003, vol. 108 (F1
- Improving PolSAR Land Cover Classification With Radiometric Correction of the Coherency Matrix. **DONALD K. ATWOOD et al.** IEEE Journal of Selected Topics in Applied Earth Observations and Remote Sensing. IEEE, 01 June 2012, vol. 5, 848-856

- Unsupervised classification using polarimetric decomposition and the complex Wishart classifier. **JONG-SEN LEE et al.** IEEE Transactions on Geoscience and Remote Sensing. IEEE Service Center, 01 September 1999, vol. 37
- **CHIA-TANG CHEN ; KUN-SHAN CHEN.** A segment-based speckle filter for polarimetric SAR. *Proc. SPIE,* 09 October 2006, vol. 6363
- Potential of C-Band Multipolarized and Polarimetric SAR for Soil Drainage Classification and Mapping. **NIANG M A et al.** Geoscience and Remote Sensing Symposium, 2008. IGARSS 2008. IEEE International. IEEE, 07 July 2008, 11-734
- Classification of Polarimetric SAR Data Based on Multidimensional Watershed Clustering. **WEN YANG et al.** Advanced Data Mining and Applications Lecture Notes in Computer Science; Lecture Notes in Artificial Intelligence. Lncs, Springer, 01 January 2006, 157-164
- Classification of Polarimetric SAR Data Using Spectral Graph Partitioning. **ERSAHIN K. et al.** Geoscience and Remote Sensing Symposium, 2006. IGARSS 2006. IEEE International Conference. IEEE, 01 July 2006, 1756-1759